# EUROPEAN PATENT SPECIFICATION

(11) **EP 1 950 126 B1**
(45) Date of publication and mention of the grant of the patent: **19.08.2009**
(21) Application number: 07120560.3
(22) Date of filing: 13.11.2007
(51) Int. Cl.: B62K 3/00, B62K 5/00, B62K 15/00

(54) **Collapsible scooter with tri-footboard**
Zusammenklappbarer Roller mit dreifachem Trittbrett
Scooter démontable avec triple-appui-pied

(43) Date of publication of application: 30.07.2008
(73) Proprietor: Chiu, Chih-Hao, 813 Kaohsiung City (TW)
(72) Inventor: Chiu, Chih-Hao, 813 Kaohsiung City (TW)
(74) Representative: Chaillot, Geneviève

(56) References cited:
- CA-A1- 2 331 930
- DE-A1- 4 410 304
- FR-A- 2 822 794
- US-A- 4 050 713
- US-A1- 2002 063 406
- US-B1- 6 719 310

## Description

### BACKGROUND OF THE INVENTION

### 1. Field of the Invention

The present invention relates to a scooter, particularly to a collapsible scooter with tri-footboard.

### 2. Description of the Related Art

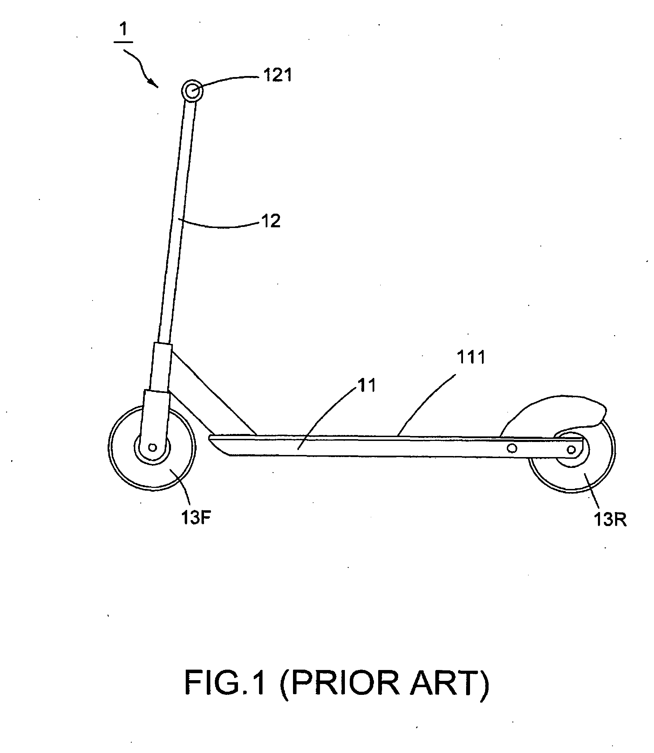

Referring to Fig. **1****,** a conventional scooter **1** comprises a frame body **11** with a frame footboard **111,** a steering stem **12** pivotally coupled thereto, and the wheels **13F** and **13R** rotatably mounted to the body **11** and the stem **12,** respectively; wherein two handlebars **121** are extended from the top end of the stem **12** for leading the coasting track of the scooter **1.**

While riding, the scooter **1** is used to be propelled through one foot of the rider, and he needs to have an incessant foot-propelling to maintain the sliding of the scooter **1;** relatively, some of other scooters may be designed to provide with two frame footboards **111** and two rear wheels (not shown in the figure) at the rear ends or at the underside of the frame footboards **111** for supporting two feet of the rider. However, it may make burden to the feet of the rider, for instance of the continuous propelling by the foot or of solely swinging feet to propel the scooter, which may result of the tiredness of feet. Further, the above operations may also affect the rider's pleasure and interest in riding the conventional scooters, which thus require improvement.

US2002063406A discloses a tricycle which is formed of a front tube, a handlebar set fastened pivotally with the front tube, a front fork pivoted with the handlebar set, a front wheel pivoted to the front fork, two swiveling members fastened pivotally with the front tube, two footboards fastened with the swiveling members, and two rear wheels fastened pivotally to the underside of the rear end of the two footboards. The footboards are provided in the upper side with an inclined tread surface to minimize the likelihood that the ankle of a rider of the tricycle is injured.

### SUMMARY OF THE INVENTION

Therefore, the object of the present invention is to provide a collapsible scooter which can be manipulated in dual operations and be easy carrying while being outside.

The scooter in accordance with the present invention is defined in claim 1. It comprises a frame body, a steering stem pivotally coupled thereto, and a wheel assembly including a front and two rear wheels; wherein, a supporting stem transversely attaches to the frame body, and two steering pivots are mounted to both sides thereof for respectively sliding toward single directions. Further, two auxiliary footboard devices attach their front ends to the steering pivots and their rear ends for the rear wheels to be pivotally mounted thereon, so as to position the footboard devices toward reverse directions by swinging the steering pivots. Thereupon, the scooter can be alternatively propelled by foot or by wriggling the buttocks of the rider and can be folded up for easy carry and storing, thereby increasing the enjoyment of riding and its convenience.

Instead of the wheels, the scooter can be equiped with skates, as defined in claim 5.

The advantages of the present invention over the known prior arts will become more apparent to those of ordinary skilled in the art upon reading the following descriptions in junction with the accompanying drawings.

### BRIEF DESCRIPTION OF THE DRAWINGS

- Fig. 1: is a side view showing a conventional scooter;
- Fig. 2: is a perspective view showing a first preferred embodiment of the present invention;
- Fig. 3: is a rear perspective view of Fig. 2 showing the scooter in a folding state;
- Fig. 4: is a front perspective view of Fig. 2 showing the scooter in a folding state;
- Fig. 5: is a bottom perspective view showing a second preferred embodiment of the present invention;
- Fig. 6: is a front perspective view of Fig. 5 showing the scooter in a folding state; and
- Fig. 7: is a perspective view showing a third preferred embodiment of the present invention.

### DETAILED DESCRIPTION OF THE PREFERRED EMBODIMENTS

Before the present invention is described in greater detail, it should be noted that the like elements are denoted by the same reference numerals throughout the disclosure.

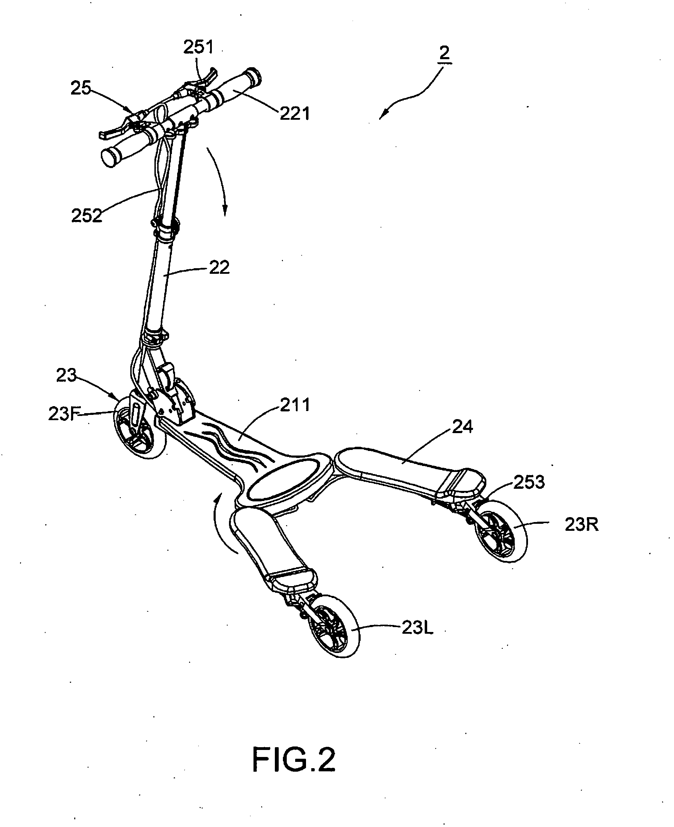

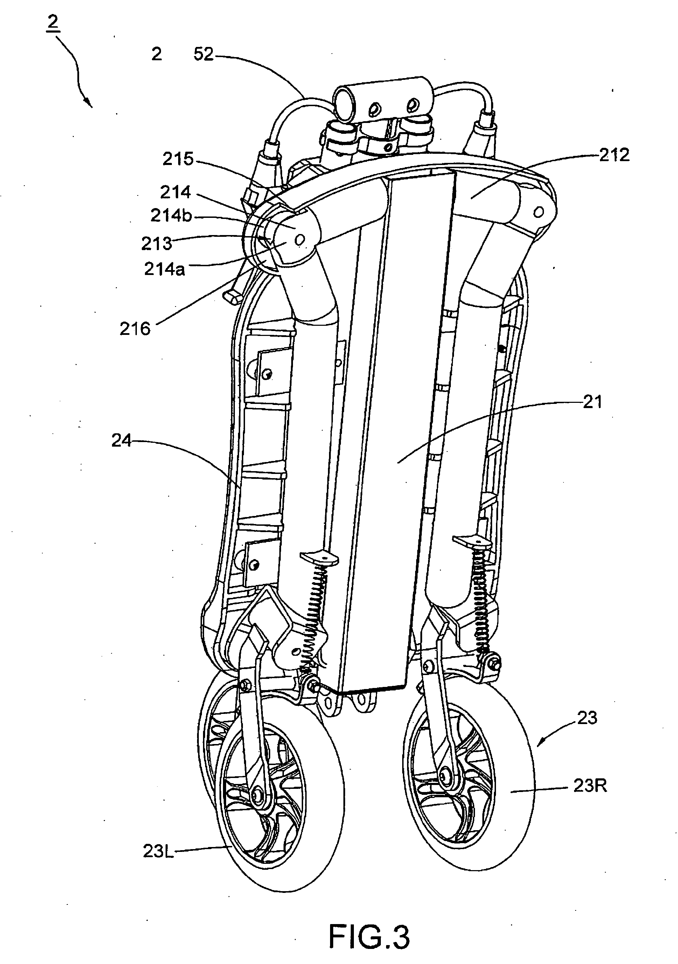

Referring to Fig. **2** and **3****,** a scooter **2** of a first preferred embodiment comprises a frame body **21** and a steering stem **22** pivotally attaching to one end of the frame body **21;** wherein, the frame body **21** provides with a frame footboard **211** disposed thereon and a supporting stem **212** is transversely attached to the other end of the frame body **21,** opposite to the steering stem **212;** further a wheel assembly **23** consisting of a front wheel **23F** and two rear wheels **23R, 23L** are rotatably mounted to the bottom end of the steering stem **22** and mounted to an opposed side of the attachment of the steering stem **22** and the frame body **21,** respectively. Two handlebars **221** pivotally fastening to a top end of the steering stem **22** and extending therefrom for controlling an orientation normal to a running direction of the scooter **2.** Also, a brake device **25** is operatively affixed to the handlebars **221** and includes two brake levers **251,** two brake pads **253** respectively mounted at the rear wheels **23R** and **23L**, and two brake cables **252,** by which the brake levers **251** are coupled to the brake pads **253.**

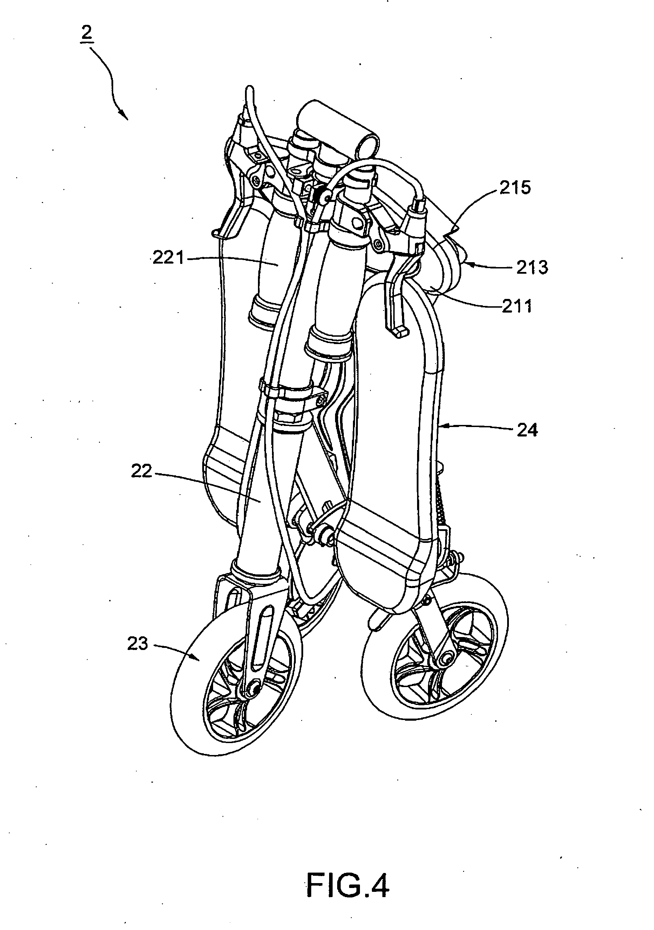

Still referring, two steering pivots **213** are respectively mounted to both sides of the supporting stem **212,** and each of which only slides toward a single direction; simultaneously two auxiliary footboard devices **24** attach their front sides to the two steering pivots **213** and outwardly extends therefrom to be positioned toward the reverse directions by swinging two steering pivots **213** (as precisely shown in Fig. **2****).** In addition, the two rear wheels **23R, 23L** can be pivotally mount at rear ends of the two auxiliary footboard devices **24.** An axle support bracket **214** consists of two support flanges **214a, 214b** and is separately disposed in parallel to the frame footboard **211** for each of the two steering pivots **213** to be pivotally mounted thereto; a fender **215** is extended between the support flanges **214a, 214b,** where an inner space **216** is thus defined. Here the fenders **215** of two axle support brackets **214** are adopted that they are extended to be connected as an entire board in the preferred embodiments (shown in Fig. **3** and **4**). Further, the two auxiliary footboard devices **24** are respectively received within the inner spaces **216** of the brackets **214,** whereby the auxiliary footboard devices **24** are restricted to be solely swung toward one direction through the axle support brackets **214,** and the fender **215** prevent the device **24** from being raised up while unfolding the scooter **2** for using. The two rear wheels **23R**, **23L** mounted at rear ends of the auxiliary footboard devices **24** thus can be smoothly rotated on the ground.

Referring to Fig. **2** to **4****,** the scooter **2** can be collapsible while being out or not in used. By means of the steering pivots **213** and axle support brackets **214,** each of the auxiliary footboard devices **24** initially moves toward the direction of the frame footboard **211** as arrowed in Fig. **2****,** so that the auxiliary footboard devices **24** have their front sides shown in Fig. **4** to be located at both sides of the frame footboard **211.** Further, taken off the handle bars **221** from the steering stem **22** and then downwardly fold the steering stem **22** toward the frame footboard **211,** thus the integral collapsible scooter **2** is formed as illustrated in Fig. **3** and **4****,** and it would be easy storing and carrying while being out. Relatively, the collapsible scooter **2** can also be unfolded according to the procedures reverse to the abovementioned steps to generate the unfolded scooter **2** of Fig. **2****,** whereby the scooter **2** can be exerted instead for walking or simply used for fun in the outside.

Still referring to Fig. **2****,** the rider can have two ways to ride the scooter **2.** Generally, the rider may step one foot on the frame footboard **211,** propel the scooter **2** into a forward direction by the other foot to push contacting with the ground, and further rest two feet thereon until a continuous foot-propelling. In this manner, the rider can grasp and squeeze the brake levers **251,** and then the brake cables **252** operate the brake pads **253** to slow down the two rear wheels **23R, 23L** or to stop them.

Alternatively, the rider may step both feet on the two auxiliary footboard devices **24** and grasp the two handlebars **221;** further, he only has to wriggle his waist and buttocks to propel the scooter **2** going into a free space **S,** and here the track is not shown in the figures. Thereupon, the rider has the above two manipulations to propel the scooter **2** going into a forward direction or into a free track, and he can operate it either for exercising or just for fun.

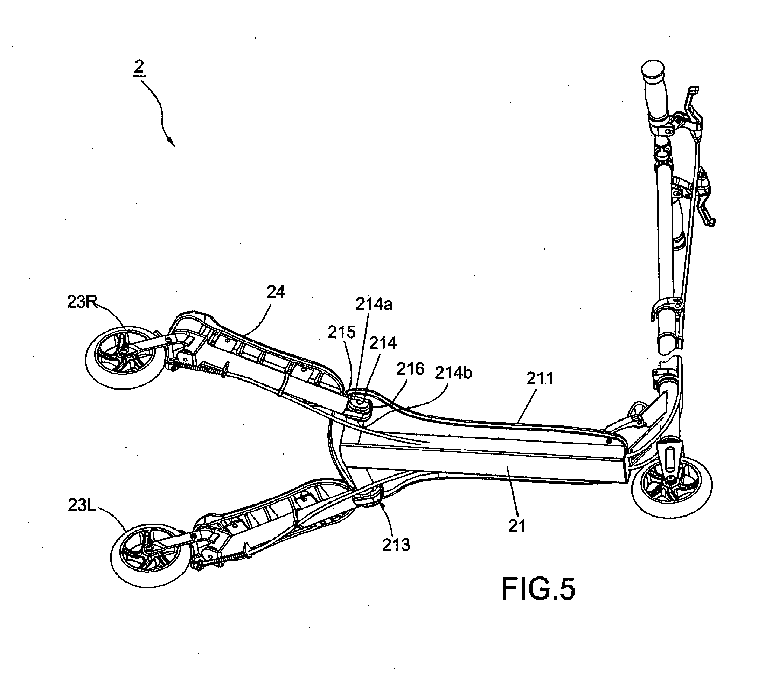

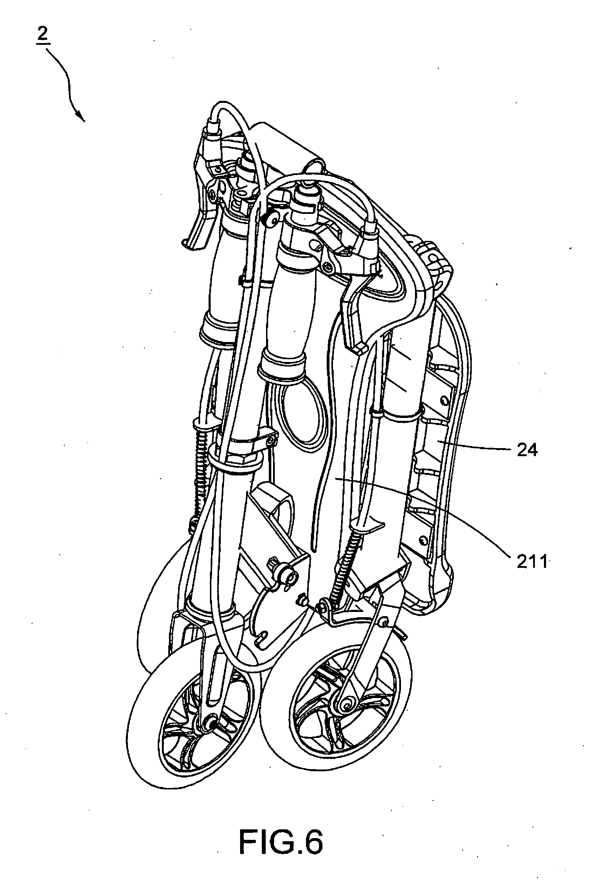

Referring to Fig. **5****,** the scooter **2** of a second preferred embodiment of the present invention comprises the elements, operations, and collapsible procedures similar to the first preferred embodiment. Differentially, an axle support brackets **214** is disposed perpendicular to the frame footboard **211** for each of the steering pivots **213** to be pivotally mounted thereto and also includes two support flanges **214a, 214b.** Further, extended between the two flanges **214a, 214b** is a fender **215,** and an inner space **216** is thus defined therein for receiving each of the auxiliary footboard devices **24** so as to restrict swinging movements thereof. In this manner, by the configurations of the axle support brackets **214** and the fender **215,** the auxiliary footboard devices **24** can only bent toward the frame body **21** and prevent themselves from being raised up while using, whereby the two rear wheels **23R, 23L** can be smoothly rotated on the ground. Further, the integral collapsible scooter **2** of the second preferred embodiment is shown in Fig. **6** that the auxiliary footboard devices **24** in a folding state have their front sides to be located at both sides of the frame body **21** (not labeled in this figure) and their rear sides to be at both sides of the frame footboard **211.**

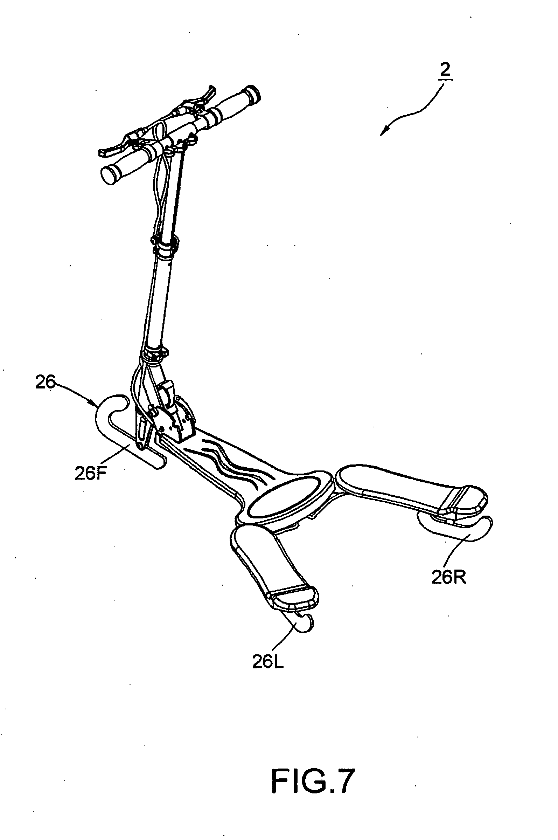

Referring to Fig. **7****,** the scooter **2** of a third preferred embodiment of the present invention comprises the elements, operations, and collapsible procedures similar to the first preferred embodiment. Particularly, a skate assembly **26** consisting of a front skate blade **26F** and two rear skate blades **26R, 26L** are pivotally disposed instead of the wheel assembly **23** comprising the front wheel **23F** and the two real wheels **23R, 23L** in the previous preferred embodiments, so that the rider may have more fun enjoying the ice-skating and be easier to fold the scooter **2** up.

To sum up, the present invention takes advantages of a supporting stem attached to the frame body and two steering pivots mounted to both sides thereof for solely sliding toward single directions; further two auxiliary footboard devices attached their front ends to the steering pivots and their rear ends to the rear wheels, whereby the footboard devices are substantially positioned toward reverse directions through swinging the steering pivots. In this manner, the scooter can have dual operations, for instance of the foot-pushing and the wriggle of one's buttock to propel the scooter going forward or going into a free direction. Moreover, the scooter is collapsible for easy carrying and storing, thereby increasing the enjoyment of riding and its convenience.

While we have shown and described the embodiment in accordance with the present invention, it should be clear to those skilled in the art that further embodiments may be made without departing from the scope of the present invention defined by the appended claims.

## Claims

1. A collapsible scooter (2) comprising:
a frame body (21);
a steering stem (22) pivotally attaching to one end of said frame body (21); and
a wheel assembly (23) consisting of a front wheel (23F) and
two rear wheels (23R, 23L) rotatably mounted to a bottom end of said steering stem (22) and mounted to an opposite site of the attachment of said steering stem (22) and said frame body (21), respectively;
two handlebars (221) pivotally fastening to a top end of said steering stem (22) and extending therefrom for controlling an orientation normal to a running direction of said scooter (2);
**characterized in that** the scooter is a tri-footboard scooter, said frame body (21) being provided with a frame footboard (211) disposed thereon;
a supporting stem (212) being attached to the other end of said frame body (21); two steering pivots (213) respectively mounted to both outward sides of said supporting stem (212) and each of which solely sliding toward a single direction; two auxiliary footboard devices (24) attached at their front sides to said two steering pivots (213), whereby said two rear wheels (23R, 23L) can be displaced to pivotally mount at rear sides of said two auxiliary footboard devices (24), so that said two auxiliary footboard devices (24) are substantially positioned toward reverse directions by swinging said two steering pivots (213).

2. The scooter as claimed in claim 1, **characterized in that** an axle support bracket (214) consisting of two support flanges (214a, 214b) is disposed in parallel to said frame footboard, (211) for each of said two steering pivots (213) to be pivotally mounted thereto; a fender (215) is extended between said two support flanges (214a, 214b), where an inner space (216) is defined for receiving each of said two auxiliary footboard devices (24) so as to restrict swinging movements thereof.

3. The scooter as claimed in claim 1, **characterized in that** an axle support bracket (214) consisting of two support flanges (214a, 214b) is disposed perpendicular to said frame footboard (211) for each of said two steering pivots (213) to be pivotally mounted thereto; a fender (215) is extended between said two support flanges (214a, 214b), where an inner space (216) is defined for receiving each of said two auxiliary footboard devices (24) so as to restrict swinging movements thereof.

4. The scooter as claimed in claim 1, **characterized in that** a brake device (25) is operatively secured to said two handlebars (221) and includes two brake levers (251) fastened to said two handlebars (221), two brake pads (253) respectively mounted at said two rear wheels (23R, 23L), and two brake cables (252), by which said two brake levers (221) are coupled to said two brake pads (253).

5. The scooter as claimed in claim 1, **characterized in that** a skate assembly (26) is pivotally disposed instead of said wheel assembly (23).

## Patentansprüche

1. Faltbarer Roller (2), der folgendes umfasst:
einen Rahmenkörper (21);
einen schwenkbar an einem Ende des Rahmenkörpers (21) befestigten Lenkschaft (22); und
eine Radkonstruktion (23), bestehend aus einem Vorderrad (23F) und zwei Hinterrädern (23R, 23L), die jeweils an einem unteren Ende des Lenkschafts (22) drehbar angebracht und an einer der Befestigung des Lenkschafts (22) und des Rahmenkörpers (21) gegenüberliegenden Seite angebracht sind;
zwei schwenkbar an einem oberen Ende des Lenkschaftes (22) befestigten Lenkstangen (221), die sich von dort aus erstrecken, zur Bestimmung einer Ausrichtung, die normal für die Laufrichtung des Rollers (2) ist;
**dadurch gekennzeichnet, dass**
es sich bei dem Roller um einen Roller mit dreifachem Trittbrett handelt, wobei der Rahmenkörper (21) mit einem Rahmentrittbrett (211) ausgestattet ist, das darauf angeordnet ist;
ein Halteschaft (212) am anderen Ende des Rahmenkörpers (21) angebracht ist; zwei Lenkzapfen (213) jeweils an beiden äußeren Seiten des Halteschafts (212) montiert sind und von denen jeder nur in eine einzige Richtung gleitet; zwei Zusatztrittbrettvorrichtungen (24) an ihren Vorderseiten an den beiden Lenkzapfen (213) angebracht sind, wobei die beiden Hinterräder (23R, 23L) zum schwenkbaren Anbringen an den Rückseiten der beiden Zusatztrittbrettvorrichtungen (24) versetzt werden können, so dass die beiden Zusatztrittbrettvorrichtungen (24) durch Schwingen der beiden Lenkzapfen (213) im Wesentlichen in Gegenrichtung positioniert werden.

2. Roller gemäß Anspruch 1,
**dadurch gekennzeichnet, dass**
eine Achshalteklammer (214) bestehend aus zwei Haltebacken (214a, 214b), parallel zu dem Rahmentrittbrett (211) angeordnet ist, zur schwenkbaren Befestigung eines jeden der beiden Lenkzapfen (213) daran; sich ein Schutz (215) zwischen den beiden Haltebacken (214a, 214b) erstreckt, wo ein Innenraum (216) zur Aufnahme jeder der beiden Zusatztrittbrettvorrichtungen (24) definiert ist, um deren Schwingbewegungen einzuschränken.

3. Roller gemäß Anspruch 1,
**dadurch gekennzeichnet, dass**
eine Achshalteklammer (214) bestehend aus zwei Haltebacken (214a, 214b) senkrecht zu dem Rahmentrittbrett (211) angeordnet ist, zur schwenkbaren Befestigung eines jeden der beiden Lenkzapfen (213) daran; sich ein Schutz (215) zwischen den beiden Haltebacken (214a, 214b) erstreckt, wo ein Innenraum (216) zur Aufnahme jeder der beiden Zusatztrittbrettvorrichtungen (24) definiert ist, um deren Schwingbewegungen einzuschränken.

4. Roller gemäß Anspruch 1,
**dadurch gekennzeichnet, dass**
eine Bremsvorrichtung (25) operativ an den beiden Lenkstangen (221) gesichert ist und zwei an den beiden Lenkstangen (221) befestigte Bremshebel (251), zwei jeweils an den beiden Hinterrädern (23R, 23L) montierte Bremsklötze (253) und zwei Bremsleitungen (252) beinhaltet, durch die die beiden Bremshebel (221) an die beiden Bremsklötze (253) gekoppelt sind.

5. Roller gemäß Anspruch 1,
**dadurch gekennzeichnet, dass**
statt einer Radkonstruktion (23) eine Kufenkonstruktion (26) schwenkbar angeordnet ist.

## Revendications

1. Trottinette pliable (2) comprenant :
- un corps de cadre (21) ;
- un tube de direction (22) se fixant de façon pivotante à une extrémité dudit corps de cadre (21) ; et
- un ensemble de roues (23) constitué d'une roue avant (23F) et de deux roues arrières (23R, 23L) respectivement montée à rotation sur une extrémité inférieure dudit tube de direction (22) et montées sur un côté opposé de la fixation dudit tube de direction (22) et dudit corps de cadre ;
- deux poignées de guidon (221) fixées de façon pivotante à une extrémité supérieure dudit tube de direction (22) et s'étendant à partir de celui-ci pour commander une orientation normale à un sens de déplacement de ladite trottinette (2) ;
**caractérisée par le fait que** la trottinette est une trottinette avec triple appui-pied, ledit corps de cadre (21) comportant un appui-pied de cadre (211) disposé sur celui-ci ;
une tige de support (212) qui est fixée à l'autre extrémité dudit corps de cadre (21) ; deux pivots de direction (213) montés respectivement sur les deux côtés externes de ladite tige de support (212) et dont chacun coulisse uniquement dans une seule direction ; deux dispositifs d'appui-pied auxiliaires (24) fixés au niveau de leurs côtés avant auxdits deux pivots de direction (213), ce par quoi lesdites deux roues arrière (23R, 23L) peuvent être déplacées pour être montées de façon pivotante aux côtés arrière desdits deux dispositifs d'appui-pied auxiliaires (24), de telle sorte que lesdits deux dispositifs d'appui-pied auxiliaires (24) sont sensiblement positionnés dans des directions inverses par un basculement desdits deux pivots de direction (213).

2. Trottinette selon la revendication 1, **caractérisée par le fait qu'**un palier de support d'axe (214) constitué de deux brides de support (214a, 214b) est disposé parallèlement audit appui-pied de cadre (211) pour chacun desdits deux pivots de direction (213) devant être montés de façon pivotante sur celui-ci ; un garde-boue (215) s'étend entre lesdites deux brides de support (214a, 214b), un espace interne (216) étant défini pour recevoir chacun desdits deux dispositifs d'appui-pied auxiliaires (24) de façon à restreindre leurs mouvements de basculement.

3. Trottinette selon la revendication 1, **caractérisée par le fait qu'**un palier de support d'axe (214) constitué de deux brides de support (214a, 214b) est disposé perpendiculairement audit appui-pied de cadre (211) pour chacun desdits deux pivots de direction (213) devant être montés de façon pivotante sur celui-ci ; un garde-boue (215) s'étend entre lesdites deux brides de support (214a, 214b), un espace interne (216) étant défini pour recevoir chacun desdits deux dispositifs d'appui-pied auxiliaires (24) de façon à restreindre leurs mouvements de basculement.

4. Trottinette selon la revendication 1, **caractérisée par le fait qu'**un dispositif de freinage (25) est fixé de façon fonctionnelle auxdites deux poignées de guidon (221) et comprend deux leviers de frein (251) fixés auxdites deux poignées de guidon (221), deux plaquettes de frein (253) montées respectivement au niveau desdites deux roues arrière (23R, 23L), et deux câbles de frein (252), par lesquels lesdits deux leviers de frein (221) sont couplés auxdites deux plaquettes de frein (253).

5. Trottinette selon la revendication 1, **caractérisée par le fait qu'**un ensemble de patins (26) est disposé de façon pivotante à la place dudit ensemble de roues (23).
